# EUROPÄISCHE PATENTSCHRIFT

(11) **EP 4 097 613 B1**
(45) Veröffentlichungstag und Bekanntmachung des Hinweises auf die Patenterteilung: **05.08.2026**
(21) Anmeldenummer: 21711758.9
(22) Anmeldetag: 01.03.2021
(51) Int. Cl.: G06F 21/44, G06F 21/73, H04L 9/32, H04L 9/40, H04L 67/12, H04W 4/42

(54) **VERIFIZIERUNGSVERFAHREN FÜR EIN ELEKTRONISCHES BAUTEIL UND BAUTEIL**
VERIFICATION METHOD FOR AN ELECTRONIC PART, AND PART
PROCÉDÉ DE VÉRIFICATION D'UN COMPOSANT ÉLECTRONIQUE, ET COMPOSANT

(30) Priorität: 26.03.2020 DE 102020203919
(43) Veröffentlichungstag der Anmeldung: 07.12.2022
(73) Patentinhaber: Siemens Mobility GmbH, 80997 München (DE)
(72) Erfinder: BROCKHAUS, Hendrik, 85579 Unterbiberg (DE); BUSSER, Jens-Uwe, 85579 Neubiberg (DE); JÄHN, Marcel, 38118 Braunschweig (DE); LORENZ, Matthias, 38159 Vechelde (DE); SCHILLING, Benjamin, 38302 Wolfenbüttel (DE)
(74) Vertreter: Siemens Patent Attorneys
(86) Internationale Anmeldenummer: PCT/EP2021/054960
(87) Internationale Veröffentlichungsnummer: WO 2021/190859

(56) Entgegenhaltungen:
- US-A1- 2005 210 254
- US-A1- 2010 037 293
- US-A1- 2017 054 566

## Beschreibung

Es wird ein Verifizierungsverfahren für ein elektronisches Bauteil angegeben. Darüber hinaus werden ein Computerprogrammprodukt für ein solches Verfahren, ein Bauteil für ein solches Verfahren sowie ein System mit mehreren solcher Bauteile zum Betreiben von Schienenfahrzeugen angegeben.

Die Druckschrift WO 2019/096491 A1 betrifft ein Verfahren und eine Vorrichtung zur Ermöglichung der Authentisierung von Erzeugnissen, insbesondere von industriell gefertigten Geräten.

Die Druckschrift US 2017/0054566 betrifft ein Verfahren und ein System zum Erstellen und zur Gültigkeitsprüfung von Gerätezertifikaten. Dabei werden an einem Produktionsarbeitsplatz Geräte initialisiert, welche jeweils ein Trusted Platform Modul (kurz TPM) enthalten, welches wiederum jeweils einen individuellen Endoresegment Key (kurz EK) enthält. Ein jeweiliger EK besteht dabei aus einem privaten Teil und einem öffentlichen Teil. Der private Teil ist im TPM gespeichert, ohne es je zu verlassen. Beim Initialisieren des mit dem TPM versehenen Gerätes wird am Produktionsarbeitsplatz mit Hilfe einer Software-Anwendung zu dem öffentlichen Teil des EK ein Gerätezertifikat (kurz EK-Zertifikat) erzeugt, indem der öffentliche Teil des EK mit einem privaten Schlüssel des Geräteherstellers signiert wird. Ein zu dem privaten Schlüssel des Geräteherstellers gehörender öffentlicher Schlüssel wird mittels eines Zwischenzertifikats des Geräteherstellers als zum Gerätehersteller gehörend bestätigt. Hierzu wird der öffentliche Schlüssel des Geräteherstellers mit einem privaten Wurzelschlüssel einer Zertifizierungsstelle des Geräteherstellers signiert. Ein zu dem privaten Wurzelschlüssel gehörender öffentlicher Wurzelschlüssel wird ebenfalls mit dem privaten Wurzelschlüssel der Zertifizierungsstelle des Geräteherstellers signiert, so dass ein selbst-signiertes Wurzelzertifikat des Geräteherstellers gebildet ist. Das Gerätezertifikat und das Zwischenzertifikat des Geräteherstellers werden auf dem Gerät gespeichert. Das Wurzelzertifikat der Zertifizierungsstelle des Geräteherstellers wird vom Gerätehersteller veröffentlicht.

Alternativ kann vorgesehen sein, dass nicht der Gerätehersteller, sondern ein Besitzer des Gerätes (im Folgenden als Gerätebesitzer bezeichnet) das Gerätezertifikat erstellt, indem der öffentliche Teil des EK mit einem privaten Schlüssel des Gerätebesitzers signiert wird. Ein zu dem privaten Schlüssel des Gerätebesitzers gehörender öffentlicher Schlüssel wird dann mittels eines Zwischenzertifikats des Gerätebesitzers als zum Gerätebesitzers gehörend bestätigt. Hierzu wird der öffentliche Schlüssel des Gerätebesitzers mit einem privaten Wurzelschlüssel einer Zertifizierungsstelle des Gerätebesitzers signiert. Ein zu dem privaten Wurzelschlüssel gehörender öffentlicher Wurzelschlüssel wird ebenfalls mit dem privaten Wurzelschlüssel der Zertifizierungsstelle des Gerätebesitzers signiert, so dass ein selbst-signiertes Wurzelzertifikat des Gerätebesitzers gebildet ist. Das Gerätezertifikat und das Zwischenzertifikat des Besitzers werden auf dem Gerät gespeichert. Das Wurzelzertifikat der Zertifizierungsstelle des Gerätebesitzers wird vom Gerätebesitzers durch einen Zertifikatauskunftsdienst bereitgestellt.

Eine zu lösende Aufgabe liegt darin, ein Verfahren anzugeben, mit dem ein Wurzelzertifikat effizient und sicher verbreitet werden kann.

Diese Aufgabe wird durch die beigefügten unabhängigen Ansprüche 1 und 12-14, unter anderem durch ein Verfahren, durch ein Computerprogrammprodukt, durch ein Bauteil sowie durch ein System mit mehreren solcher Bauteile gelöst. Bevorzugte Weiterbildungen sind Gegenstand der abhängigen Ansprüche. Das hier beschriebene Verfahren ermöglicht insbesondere die Verteilung von Wurzelzertifikaten eines Nutzers, auch als Customer Root Certificate bezeichnet, mittels einer signierten Zertifikatdatei, auch Trust Anchor File genannt.

In mindestens einer Ausführungsform dient das Verfahren zur Verifizierung elektronischer Bauteile und umfasst die folgenden Schritte, insbesondere in der angegebenen Reihenfolge:
A) Bereitstellen des Bauteils, wobei das Bauteil eine Kennung und ein Wurzelzertifikat eines Vertreibers des Bauteils umfasst,
B) Erzeugen einer Zertifikatdatei, wobei die Zertifikatdatei die Kennung und zumindest ein Kunden-Wurzelzertifikat eines Nutzers des Bauteils umfasst,
C) Signieren der Zertifikatdatei mit einem Zertifikat des Vertreibers, sodass eine signierte Zertifikatdatei resultiert,
D) Aufspielen der signierten Zertifikatdatei auf das Bauteil, und
E) Inbetriebnehmen des Bauteils durch den Nutzer, wobei die signierte Zertifikatdatei und damit das Kunden-Wurzelzertifikat durch das Bauteil verifiziert werden.

Zertifikate mit öffentlichen Schlüsseln, auch als PKI-Zertifikate bezeichnet, werden für eine IT-sichere Kommunikation zwischen Bauteilen benötigt. PKI steht dabei für Public Key Infrastructure. Während des Herstellens der Verbindung wird dabei das Zertifikat des zu kontaktierenden Bauteils verifiziert. Ein wichtiger Schritt bei der Verifikation ist es zu überprüfen, ob das Zertifikat von einer vertrauenswürdigen Einrichtung, englisch Trusted Entity, ausgestellt wurde.

Für gewöhnlich werden Zertifikate von einem Aussteller signiert. Das Zertifikat des Ausstellers selbst ist mit einem Wurzelzertifikat, englisch Root Certificate, signiert, auch als Vertrauensanker oder englisch Trust Anchor bezeichnet. Zertifikate werden nur akzeptiert, wenn dem Vertrauensanker von dem betreffenden Bauteil vertraut wird. Der Vertrauensanker, dem vertraut werden kann, ist dem Bauteil bekannt zu machen, beispielsweise durch Importieren der entsprechenden Informationen.

Mit dem hier beschriebenen Verfahren erfolgt das Verteilen des Wurzelzertifikats über eine Zertifikatdatei, die von einem Vertreiber des Bauteils signiert ist. Damit ist eine effiziente und sichere Verteilung des Wurzelzertifikats auf verschiedene Bauteile ermöglicht. Bei den Bauteilen handelt es sich dabei insbesondere um Server, in eine Leiterplatte eingebettete elektronische Komponenten, englisch Embedded Components, oder auch um Datenübertragungsmodule. Alternativ kann das Bauteil auch ein Software-Modul sein, sodass das Bauteil nicht notwendigerweise eine strikt abgegrenzte elektronische Untereinheit in einem größeren System, wie einem Computer, zu sein braucht.

Bei den Wurzelzertifikaten handelt es sich zum Beispiel je um ein X.509-Root Certificate.

Alternative Möglichkeiten zur Verteilung von Wurzelzertifikaten liegen im manuellen Import von PKI-Trust Anchors auf Bauteile. Eine andere alternative Möglichkeit liegt darin, lediglich einen einzigen PKI-Trust Anchor für alle vertriebenen Bauteile zu verwenden. Außerdem liegt eine alternative Möglichkeit darin, alle möglichen PKI-Trust Anchors vorzuinstallieren. Schließlich liegt eine alternative Möglichkeit darin, nur selbstsignierte Zertifikate zu benutzen und zu importieren. Eine weitere Alternative liegt in der Verwendung eines Vouchers gemäß RFC 8366, wobei der Voucher nur genau eine Kennung enthält.

Die Kennung ist zum Beispiel eine Seriennummer oder ein Identifikator, englisch Identifier oder kurz ID, wie eine CPU-ID.

Zusammengefasst beinhaltet das hier beschriebene Verfahren bevorzugt die folgenden Schritte, insbesondere in der angegebenen Reihenfolge:
1. Das Wurzelzertifikat, insbesondere der Trust Anchor, des Herstellers des Bauteils ist Teil der ursprünglichen Programmierung des Bauteils des Herstellers, auch als Firmware bezeichnet. Das Wurzelzertifikat ist dann insbesondere ein X.509-Root Certificate.
2. Eine Seriennummer des Bauteils ist eindeutig und dem Bauteil bekannt.
3. Wird eine ordentliche Sicherheitspraxis eingehalten, auch als Good Security Practice oder kurz GSP bezeichnet, so hat jeder Nutzer seinen eigenen Trust Anchor für seine PKI-Zertifikate.
4. Wird ein Bauteil oder werden mehrere Bauteile an den Nutzer verkauft, wird eine Zertifikatdatei erstellt, die den Trust Anchor des Nutzers und die Seriennummern der verkauften Bauteile beinhaltet. Die Zertifikatdatei ist zum Beispiel eine XML-Datei.
5. Die Zertifikatdatei wird dann mit einem Zertifikat des Vertreibers signiert, beispielsweise mittels XML-DSIG, wobei die betreffende Signatur zum Wurzelzertifikat des Herstellers zurückverfolgt werden kann und das Wurzelzertifikat des Herstellers Teil der Firmware des Bauteils ist.

Optional verfügt das Zertifikat, das für das Signieren der Zertifikatdatei verwendet wird, über eine spezielle Schlüsselverwendung, englisch Special Key Usage. Die spezielle Schlüsselverwendung gibt an, dass das betreffende Zertifikat autorisiert ist, die Zertifikatdatei mit dem Wurzelzertifikat zu signieren.

6. Die Bauteile und die signierte Zertifikatdatei werden an den Nutzer geliefert. Die Auslieferung der Bauteile kann optional auch bereits vor dem Schritt Nr. 3 erfolgen.

7. Während des Inbetriebnehmens oder Kommissionierens der Bauteile wird die signierte Zertifikatdatei auf das Bauteil aufgespielt, beispielsweise importiert, kopiert oder auf das Bauteil über einen Web-Server heruntergeladen.

8. Das Bauteil verifiziert die Signatur und das Zertifikat der Zertifikatdatei mit dem Wurzelzertifikat des Nutzers.

Optional verifiziert das Bauteil dabei, ob das Zertifikat, mit dem die Zertifikatdatei signiert ist, die spezielle Schlüsselverwendung hat und damit autorisiert ist, die Zertifikatdatei zu signieren.

9. Das Bauteil überprüft, ob seine Seriennummer in der Zertifikatdatei enthalten ist.

10. Nach erfolgreicher Verifikation in den Schritten 8 und 9 vertraut das Bauteil dem zumindest einen Wurzelzertifikat des Nutzers in der Zertifikatdatei, auch als Trust Anchor File bezeichnet.

11. Falls erforderlich werden die Schritte 8, 9 und/oder 10 erneut durchgeführt, beispielsweise wenn eine neue Verbindung erfolgt, das Bauteil neu gestartet wird oder ein Rebooten erfolgt.

Somit ergibt sich aus dem Bauteil, das ursprünglich die Kennung und das Wurzelzertifikat des Vertreibers aufweist, zusammen mit der basierend auf dem Wurzelzertifikat des Vertreibers signierten Zertifikatdatei, die das Wurzelzertifikat des Nutzers sowie die betreffenden Kennungen umfasst, schließlich ein Bauteil umfassend die Kennung, das Wurzelzertifikat des Vertreibers und das Wurzelzertifikat des Nutzers.

Mit dem hier beschriebenen Verfahren lässt sich somit eine kryptographisch gesicherte Installation von Wurzelzertifikaten erreichen. Außerdem werden keine zusätzlichen Schutzmechanismen, wie ein Hardware-basierter Schutz etwa mittels TPM, benötigt; die Integrität und Authentizität werden über die Signatur der signierten Zertifikatdatei sichergestellt.

Bei dem hier beschriebenen Verfahren ist es insbesondere lediglich erforderlich, dass nur das Wurzelzertifikat des Nutzers, aus der signierten Zertifikatsdatei, installiert wird.

Wird nur das Wurzelzertifikat des Nutzers als Vertrauensanker für die Kommunikation akzeptiert, so können nur Bauteile, die vom selben Nutzer erworben wurden, bestimmungsgemäß miteinander kommunizieren. Dies hat für die IT-Sicherheit den Vorteil, dass keine Bauteile, die von einem Angreifer erworben wurden, in das Netzwerk des Nutzers eingeführt werden können. Außerdem kann ein unkontrollierter Weiterverkauf des Bauteils durch den Nutzer unterbunden werden.

Dies wird insbesondere durch das Zusammenspiel des Wurzelzertifikats des Vertreibers in der Firmware mit der eindeutigen Kennung des Bauteils und mit der kryptographisch signierten Zertifikatdatei, umfassend das Wurzelzertifikat des Nutzers, erreicht.

Bei dem Vertreiber des Bauteils handelt es sich insbesondere um einen Hersteller des Bauteils. Jedoch kann der Hersteller auch einem Vertreiber ermöglichen, das oben beschriebene Verfahren zur Erstellung der signierten Zertifikatdatei durchzuführen. Alternativ agiert der Hersteller lediglich im Auftrag des Vertreibers, so dass dann der Hersteller durch den Vertreiber zur Erstellung der signierten Zertifikatdatei autorisiert sein kann.

Gemäß zumindest einer Ausführungsform wird das Verfahren bei einer Vielzahl der Bauteile angewandt. Dabei wird bevorzugt im Schritt D) auf alle Bauteile die gleiche signierte Zertifikatdatei aufgespielt. Die zugrundeliegende Zertifikatdatei umfasst in diesem Fall die Kennungen aller betreffenden Bauteile insbesondere in aufzählender Form oder auch in Form von Nummernbändern, zum Beispiel 100-200, 300-400. Somit ist es nicht erforderlich, für jedes Bauteil individuell eine eigene Zertifikatdatei zu erzeugen.

Gemäß zumindest einer Ausführungsform des Verfahrens, wobei das Verfahren auf eine Vielzahl der Bauteile angewandt wird, werden die betreffenden Bauteile in ein Kommunikationsnetzwerk insbesondere des Nutzers integriert. Das heißt, die Bauteile sind dazu eingerichtet, im Netzwerk des Nutzers miteinander zu kommunizieren.

Hierbei ist es möglich, dass eine Datenverbindung nur zwischen solchen Bauteilen etabliert werden kann, die die oben genannten Verfahrensschritte A) bis E) erfolgreich durchlaufen haben. Alternativ ist es möglich, dass eine Datenverbindung außerdem zu Bauteilen aufgebaut werden kann, die über ein Nutzer-Zertifikat des Nutzers verfügen, wobei dieses Nutzer-Zertifikat auf das Kunden-Wurzelzertifikat in der Zertifikatdatei zurückführbar ist. Somit können bevorzugt nur solche Bauteile bestimmungsgemäß miteinander kommunizieren, deren Zertifikat direkt oder indirekt auf das Kunden-Wurzelzertifikat zurückgeht.

Gemäß zumindest einer Ausführungsform ist der Schritt des Signierens der Zertifikatdatei ausschließlich vom Vertreiber oder von einer vom Vertreiber und/oder Hersteller autorisierten Instanz durchführbar. Damit ist es möglich, dass der Hersteller und/oder der Vertreiber volle Kontrolle über Verkauf und Weiterverkauf des Bauteils behält. Insbesondere ist das Bauteil ohne die signierte Zertifikatdatei nicht oder nicht voll funktionsfähig. Das heißt, das Vorliegen der signierten Zertifikatdatei kann eine notwendige Bedingung für das Inbetriebnehmen des Bauteils sein.

Gemäß zumindest einer Ausführungsform werden zumindest die oben genannten Schritte B) und C) vom Vertreiber und/oder Hersteller durchgeführt. Damit kann der Vertreiber und/oder der Hersteller die volle Kontrolle über das Erzeugen der Zertifikatdatei ausüben.

Gemäß zumindest einer Ausführungsform wird der Schritt D) vor einem Ausliefern des Bauteils an den Nutzer durchgeführt. Alternativ wird der Schritt D) nach dem Ausliefern durchgeführt.

Gemäß zumindest einer Ausführungsform verfügt das Zertifikat des Vertreibers über eine spezielle Schlüsselverwendung, englisch Special Key Usage, die anzeigt, dass dieses Zertifikat zum Signieren von Zertifikatdateien autorisiert ist. Demgemäß prüft das Bauteil im Schritt D) und/oder im Schritt E) bevorzugt, ob das Zertifikat des Vertreibers über die spezielle Schlüsselverwendung verfügt.

Darüber hinaus wird ein Computerprogrammprodukt angegeben, umfassend Befehle, die bei der Ausführung des Programms durch einen Computer oder durch ein Computersystem diesen veranlassen oder dieses veranlasst, insbesondere die Schritte B), C) und D) oder alle Schritte eines Verfahrens nach einer oder mehreren der oben genannten Ausführungsformen auszuführen. Merkmale des Computerprogrammprodukts sind daher auch für das Verfahren offenbart und umgekehrt. Insbesondere wird das betreffende Programm teilweise oder vollständig auf dem Bauteil ausgeführt.

Darüber hinaus wird ein Bauteil angegeben, umfassend einen Speicher, einen Prozessor und eine Kommunikationsschnittstelle. Das Bauteil ist für ein Verfahren eingerichtet, wie in Verbindung mit einer oder mehreren der oben genannten Ausführungsformen beschrieben, insbesondere für die Verfahrensschritte A) und E). Merkmale des Bauteils sind daher auch für das Verfahren offenbart und umgekehrt.

Schließlich wird ein System zum Betreiben von Schienenfahrzeugen angegeben, wobei das System mehrere der vorgenannten Bauteile umfasst. Dabei befinden sich die Bauteile insbesondere in zumindest einem der Schienenfahrzeuge, in zumindest einer Streckenzentrale und/oder in zumindest einem Stellwerk des Systems.

Die oben genannten Eigenschaften, Merkmale und Vorteile der Erfindung und die Art und Weise, wie diese erreicht werden, werden durch die folgende Beschreibung der Ausführungsbeispiele der Erfindung in Verbindung mit den entsprechenden Figuren weitergehend erläutert, wobei die
- Figuren 1 und 2: schematische Darstellungen von Ausführungsbeispielen von hier beschriebenen Verfahren zur Verifizierung von hier beschriebenen Bauteilen zeigen,
- Figur 3: eine schematische Darstellung eines Kommunikationsnetzwerks von hier beschriebenen Bauteilen zeigt und
- Figur 4: eine schematische Darstellung eines Systems mit hier beschriebenen Bauteilen zum Betreiben von Schienenfahrzeugen zeigt.

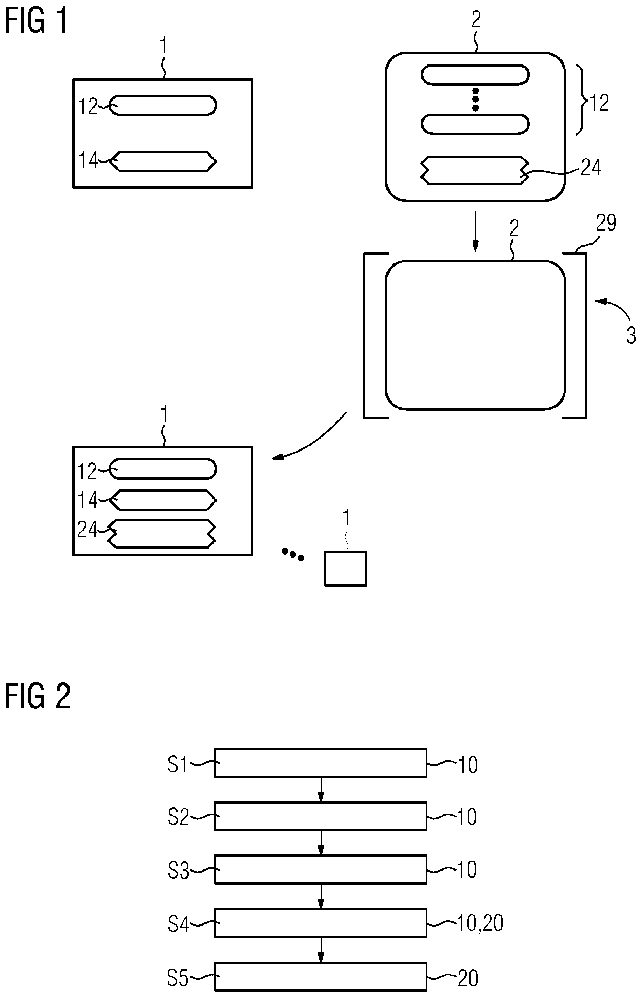

In den Figuren 1 und 2 ist schematisch ein Ausführungsbeispiel eines hier beschriebenen Verfahrens zur Verifikation von Bauteilen beschrieben. Die Verfahrensschritte, wie in Figur 2 als Ablaufdiagramm illustriert, sind anhand von Figur 1 näher erläutert.

In einem ersten Schritt S1 wird von einem Vertreiber 10 ein elektronisches Bauteil 1 bereitgestellt. Bei dem Bauteil 1 handelt es sich beispielsweise um einen Server. Der Vertreiber 10 kann ein Hersteller des Bauteils 1 sein. Das Bauteil 1 umfasst eine eindeutige Kennung 12, auch als ID bezeichnet. Außerdem umfasst das Bauteil 1 ein Wurzelzertifikat 14 des Vertreibers 10. Das Wurzelzertifikat 14 des Vertreibers 10 kann auch als Manufacturer Trust Anchor bezeichnet werden.

Im Schritt S2 wird bevorzugt vom Vertreiber 10 eine Zertifikatdatei 2 erzeugt. Die Zertifikatdatei 2 umfasst mehrere Kennungen 12, die jeweils ein bestimmtes Bauteil 1 eindeutig identifizieren. Außerdem umfasst die Zertifikatdatei 2 ein Kunden-Wurzelzertifikat 24. Das Kunden-Wurzelzertifikat 24 kann auch als Customer Trust Anchor bezeichnet werden.

Im Schritt S3 erfolgt durch den Vertreiber 10 ein Signieren der Zertifikatdatei 2 mit einem Zertifikat 29 des Vertreibers 10. Hieraus resultiert eine signierte Zertifikatdatei 3. Das Zertifikat 29 kann optional über eine spezielle Schlüsselverwendung, englisch Special Key Usage, verfügen.

Im weiteren Schritt S4 des Verfahrens wird die signierte Zertifikatdatei 3 auf das Bauteil 1 aufgespielt, zum Beispiel durch den Vertreiber 10 oder auch durch den Nutzer 20, und es wird vom Bauteil 1 geprüft, ob das Zertifikat 29 ordnungsgemäß ist. Mit anderen Worten erfolgt im Schritt S5 eine Verifikation der signierten Zertifikatdatei 3 durch das Bauteil 1 im Rahmen der Inbetriebnahme des Bauteils 1 insbesondere durch den Nutzer 20. Dies schließt eine Prüfung mit ein, ob die Kennung 12 des Bauteils 1 in der Liste von Kennungen 12 der Zertifikatdatei 2 enthalten ist, ob also die Zertifikatdatei 2 eine zulässige Kennung 12 für das Bauteil 1 beinhaltet.

Nach erfolgreicher Verifikation beinhaltet das Bauteil 1 somit die überprüfte Kennung 12, das Wurzelzertifikat 14 des Vertreibers 10 sowie das Kunden-Wurzelzertifikat 24 des Nutzers 20.

Außerdem ist in Figur 1 veranschaulicht, dass das Verfahren auf eine Vielzahl von Bauteilen 1 angewendet werden kann, sodass am Ende des Verfahrens mehrere der Bauteile 1 resultieren, die jeweils die zugehörige Kennung 12, das Wurzelzertifikat 14 des Vertreibers 10 sowie das Kunden-Wurzelzertifikat 24 beinhalten.

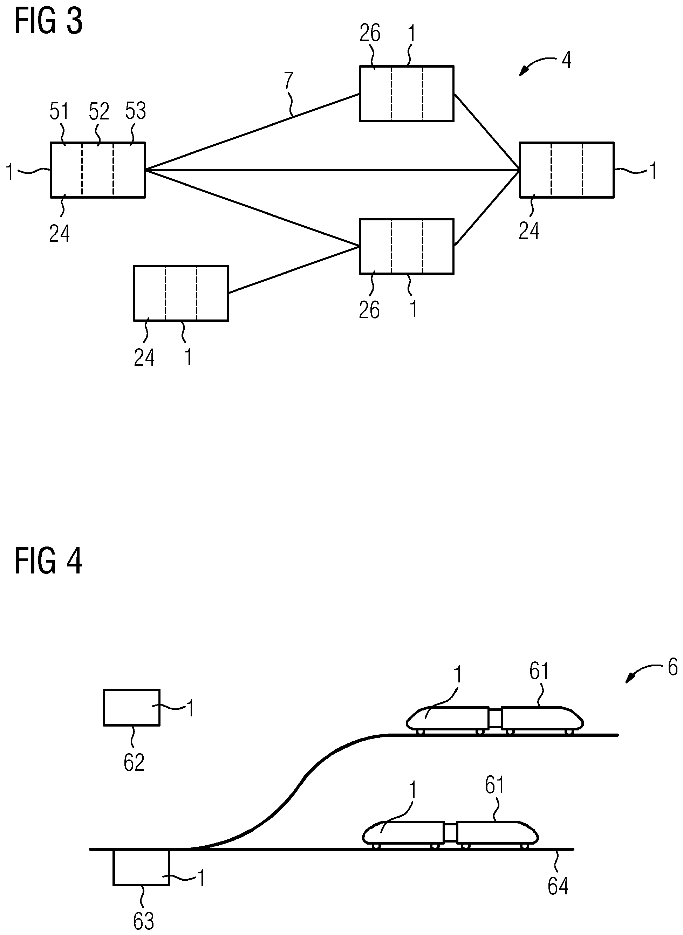

In Figur 3 ist ein Kommunikationsnetzwerk 4 illustriert. Das Kommunikationsnetzwerk 4 umfasst mehrere der Bauteile 1. Bevorzugt umfassen die Bauteile 1 dabei jeweils einen Speicher 51, einen Prozessor 52 sowie eine Kommunikationsschnittstelle 53. Die Kommunikationsschnittstelle 53 kann für eine drahtgebundene oder auch für eine kabellose Kommunikation eingerichtet sein, zum Beispiel für einen Zugfunk gemäß dem Standard GSM-R.

In dem Kommunikationsnetzwerk 4 können nur solche Bauteile 1 untereinander eine Datenverbindung 7 etablieren, die entweder das Verfahren der Figuren 1 und 2 durchlaufen haben oder die über ein Nutzer-Zertifikat 26 verfügen, das auf das Kunden-Wurzelzertifikats 24, wie in den betreffenden Bauteilen 1 hinterlegt, zurückgeht.

Damit lässt sich erreichen, dass ausschließlich Bauteile 1 an einem Datenaustausch in dem Kommunikationsnetzwerk 4 teilnehmen können, die vom Nutzer 20 entsprechend autorisiert sind. Das Aufspielen der Kunden-Wurzelzertifikate 24 erfolgt dabei kryptographisch gesichert durch das Zertifikat 29 des Vertreibers 10. Damit ist auch sichergestellt, dass die Bauteile 1 vom Nutzer 20 nicht unautorisiert weiterverkauft werden können, da ohne Zutun des Vertreibers 10 kein anderes Kunden-Wurzelzertifikats auf den Bauteilen 1 aufgespielt werden kann.

In Figur 4 ist ein System 6 zum Betreiben von Schienenfahrzeugen 61 schematisch illustriert. Das System 6 umfasst ein Schienennetz 64, auf dem bevorzugt mehrere der Schienenfahrzeuge 61 verkehren. Weiterhin umfasst das System 6 bevorzugt zumindest einen Stellwerk 63 sowie zumindest eine Streckenzentrale 62. Die Streckenzentrale 62 ist insbesondere eine ETCS-Streckenzentrale, auch als Radio Block Centre oder kurz RBC bezeichnet.

Bevorzugt umfassen sowohl die Schienenfahrzeuge 61 als auch die Streckenzentrale 62 sowie das Stellwerk 63 zumindest eines der verifizierten Bauteile 1. Damit ist sichergestellt, dass nur verifizierte Bauteile 1 miteinander kommunizieren können, so dass das Netzwerk zum Betreiben des Systems 6 sicher ist und Dritte nicht unerlaubt Zugriff erlangen können.

Obwohl die Erfindung anhand von Ausführungsbeispielen detailliert dargestellt und beschrieben wurde, ist die Erfindung nicht auf die offenbarten Ausführungsbeispiele und die darin erläuterten konkreten Merkmalskombinationen beschränkt. Weitere Variationen der Erfindung können von einem Fachmann erhalten werden, ohne den Schutzumfang der beanspruchten Erfindung zu verlassen.

### Bezugszeichenliste

- 1: elektronisches Bauteil
- 10: Vertreiber
- 12: Kennung des Bauteils
- 14: Wurzelzertifikat des Vertreibers
- 2: Zertifikatdatei
- 20: Nutzer des Bauteils
- 24: Kunden-Wurzelzertifikat
- 26: Nutzer-Zertifikat
- 29: Zertifikat des Vertreibers
- 3: signierte Zertifikatdatei
- 4: Kommunikationsnetzwerk
- 51: Speicher
- 52: Prozessor
- 53: Kommunikationsschnittstelle
- 6: System zum Betreiben von Schienenfahrzeugen
- 61: Schienenfahrzeug
- 62: Streckenzentrale
- 63: Stellwerk
- 64: Schienennetz
- 7: Datenverbindung
- S1-S5: Verfahrensschritt

## Patentansprüche

1. Verifizierungsverfahren für ein elektronisches Bauteil (1) mit den Schritten:
A) Bereitstellen des Bauteils (1), wobei das Bauteil (1) eine Kennung (12) und ein Wurzelzertifikat (14) eines Vertreibers (10) des Bauteils (1) umfasst,
B) Erzeugen einer Zertifikatdatei (2), wobei die Zertifikatdatei (2) die Kennung (12) und zumindest ein Kunden-Wurzelzertifikat (24) eines Nutzers (20) des Bauteils (1) umfasst,
C) Signieren der Zertifikatdatei (2) mit einem Zertifikat (29) des Vertreibers (10), sodass eine signierte Zertifikatdatei (3) resultiert,
D) Aufspielen der signierten Zertifikatdatei (3) auf das Bauteil (1), und
E) Inbetriebnehmen des Bauteils (1) durch den Nutzer (20), wobei die signierte Zertifikatdatei (3) und damit das Kunden-Wurzelzertifikat (24) durch das Bauteil (1) verifiziert werden.

2. Verfahren nach Anspruch 1,
das für eine Vielzahl der Bauteile (1) angewandt wird,
wobei im Schritt D) auf alle Bauteile (1) die gleiche signierte Zertifikatdatei (3) aufgespielt wird und die zugrundeliegende Zertifikatdatei (2) die Kennungen (12) aller betreffenden Bauteile (1) umfasst.

3. Verfahren nach einem der Ansprüche 1 oder 2,
das auf eine Vielzahl der Bauteile (1) angewandt wird,
wobei diese Bauteile (1) in ein Kommunikationsnetzwerk (4) des Nutzers (20) integriert werden.

4. Verfahren nach Anspruch 3,
wobei eine Datenverbindung (7) nur zwischen solchen Bauteilen (1) etabliert werden kann, die die Verfahrensschritte A) bis E) erfolgreich durchlaufen haben oder die über ein Nutzer-Zertifikat (26) des Nutzers (20) verfügen, das auf das Kunden-Wurzelzertifikat (24) zurückführbar ist.

5. Verfahren nach einem der Ansprüche 1 bis 4,
wobei der Schritt C) ausschließlich vom Vertreiber (10) oder von einer vom Vertreiber (10) autorisierten Instanz durchführbar ist und das Bauteil (1) ohne die signierte Zertifikatdatei (3) funktionsunfähig ist.

6. Verfahren nach einem der Ansprüche 1 bis 5,
wobei zumindest die Schritte B) und C) vom Vertreiber (10) durchgeführt werden.

7. Verfahren nach einem der Ansprüche 1 bis 6,
wobei der Schritt D) vor einem Ausliefern des Bauteils (1) an den Nutzer (20) durchgeführt wird.

8. Verfahren nach einem der Ansprüche 1 bis 6,
wobei der Schritt D) nach einem Ausliefern des Bauteils (1) an den Nutzer (20) durchgeführt wird.

9. Verfahren nach einem der Ansprüche 1 bis 8,
wobei das Zertifikat (29) des Vertreibers (10) über eine spezielle Schlüsselverwendung verfügt, die anzeigt, dass dieses Zertifikat (29) zum Signieren von Zertifikatsdateien (2) autorisiert ist.

10. Verfahren nach Anspruch 9,
wobei das Bauteil (1) im Schritt D) und/oder im Schritt E) prüft, ob das Zertifikat (29) des Vertreibers (10) über die spezielle Schlüsselverwendung verfügt.

11. Verfahren nach einem der Ansprüche 1 bis 10,
wobei das Bauteil (1) ein Server, eine in eine Leiterplatte eingebettete elektronische Komponente oder ein Datenübertragungsmodul ist.

12. Computerprogrammprodukt, umfassend Befehle, die bei der Ausführung des Programms durch einen Computer diesen veranlassen, alle die Schritte des Verfahrens nach einem der Ansprüche 1 bis 11 auszuführen.

13. Bauteil (1),
umfassend einen Speicher (51), einen Prozessor (52) und eine Kommunikationsschnittstelle (53),
wobei das Bauteil (1) für ein Verfahren nach einem der Ansprüche 1 bis 11 eingerichtet ist.

14. System (6) zum Betreiben von Schienenfahrzeugen (61), das mehrere Bauteile (1) nach Anspruch 13 umfasst,
wobei sich die Bauteile (1) in zumindest einem der Schienenfahrzeuge (61), in zumindest einer Streckenzentrale (62) und/oder in zumindest einem Stellwerk (63) des Systems (6) befinden.

## Claims

1. Verification method for an electronic component (1), with the steps:
A) providing the component (1), wherein the component (1) comprises an identifier (12) and a root certificate (14) of a distributor (10) of the component (1),
B) generating a certificate file (2), wherein the certificate file (2) comprises the identifier (12) and at least one customer root certificate (24) of a user (20) of the component (1),
C) signing the certificate file (2) with a certificate (29) of the distributor (10), resulting in a signed certificate file (3),
D) provisioning the signed certificate file (3) onto the component (1), and
E) the user (20) commissioning the component (1), wherein the signed certificate file (3) and thus the customer root certificate (24) are verified by the component (1).

2. Method according to claim 1,
which is used for a plurality of the components (1), wherein in step D) the same signed certificate file (3) is provisioned onto all components (1) and the underlying certificate file (2) comprises the identifiers (12) of all components (1) concerned.

3. Method according to one of claims 1 or 2,
which is used for a plurality of the components (1), wherein these components (1) are integrated in a communication network (4) of the user (20).

4. Method according to claim 3,
wherein a data connection (7) can only be established between the components (1) that have successfully run through the method steps A) to E) or that have a user certificate (26) of the user (20) which can be traced back to the customer root certificate (24).

5. Method according to one of claims 1 to 4,
wherein step C) may only be performed by the distributor (10) or by an entity authorised by the distributor (10) and the component (1) is unable to function without the signed certificate file (3).

6. Method according to one of claims 1 to 5,
wherein at least steps B) and C) are performed by the distributor (10).

7. Method according to one of claims 1 to 6,
wherein step D) is performed before the component (1) is delivered to the user (20).

8. Method according to one of claims 1 to 6,
wherein step D) is performed after the component (1) is delivered to the user (20).

9. Method according to one of claims 1 to 8,
wherein the certificate (29) of the distributor (10) has a special key usage which indicates that this certificate (29) is authorised for signing certificate files (2).

10. Method according to claim 9,
wherein, in step D) and/or in step E), the component (1) checks whether the certificate (29) of the distributor (10) has the special key usage.

11. Method according to one of claims 1 to 10,
wherein the component (1) is a server, an electronic component embedded in a circuit board, or a data transfer module.

12. Computer program product, comprising commands, which, when the program is executed by a computer, cause it to carry out all steps of the method according to one of claims 1 to 11.

13. Component (1),
comprising a memory (51), a processor (52) and a communication interface (53),
wherein the component (1) is configured for a method according to one of claims 1 to 11.

14. System (6) for operating rail vehicles (61),
which comprises multiple components (1) according to claim 13, wherein the components (1) are situated in at least one of the rail vehicles (61), in at least one radio block centre (62) and/or in at least one interlocking (63) of the system (6).

## Revendications

1. Procédé de vérification d'une pièce (1) électronique comprenant les stades :
A) se procurer la pièce (1), dans lequel la pièce (1) comprend une identification (12) et un certificat (14) racine d'un fournisseur (10) de la pièce (1),
B) produire un fichier (2) de certificat, dans lequel le fichier (2) de certificat comprend l'identification (12) et au moins un certificat (24) racine de client d'un utilisateur (20) de la pièce (1),
C) signer le fichier (2) de certificat par un certificat (29) du fournisseur (10), de manière à obtenir un fichier (3) de certificat signé,
D) charger le fichier (3) de certificat signé sur la pièce (1), et
E) mettre la pièce (1) en fonctionnement par l'utilisateur (20), dans lequel le fichier (3) de certificat signé et ainsi le certificat (24) racine de client sont vérifiés par la pièce (1).

2. Procédé suivant la revendication 1,
qui est appliqué à une pluralité de pièces (1), dans lequel dans le stade D) on charge sur toutes les pièces (1) le même fichier (3) de certificat signé et le fichier (2) de certificat de base comprend les identifications (12) de toutes les pièces (1) concernées.

3. Procédé suivant l'une des revendications 1 ou 2,
que l'on applique à une pluralité des pièces (1), dans lequel on intègre ces pièces (1) dans un réseau (4) de communication de l'utilisateur (20).

4. Procédé suivant la revendication 3,
dans lequel on peut établir une communication (7) de données seulement entre des pièces (1), qui ont passé avec succès les stades A) à E) du procédé ou qui disposent d'un certificat (26) de l'utilisateur (20), qui ramène au certificat (24) racine de client.

5. Procédé suivant l'une des revendications 1 à 4,
dans lequel le stade C) peut être exécuté exclusivement par le fournisseur (10) ou par une instance autorisée par le fournisseur (10) et la pièce (1) est incapable de fonctionner sans le fichier (3) de certificat signé.

6. Procédé suivant l'une des revendications 1 à 5,
dans lequel au moins les stades B) et C) sont effectués par le fournisseur (10).

7. Procédé suivant l'une des revendications 1 à 6,
dans lequel le stade D) est effectué avant une livraison de la pièce (1) à l'utilisateur (20).

8. Procédé suivant l'une des revendications 1 à 6,
dans lequel le stade D) est effectué après une livraison de la pièce (1) à l'utilisateur (20).

9. Procédé suivant l'une des revendications 1 à 8,
dans lequel le certificat (29) du fournisseur (10) dispose d'une application spéciale de clé, qui indique que ce certificat (29) est autorisé pour signer des fichiers (2) de certificat.

10. Procédé suivant la revendication 9,
dans lequel la pièce (1) contrôle, dans le stade D) et/ou dans le stade E), si le certificat (29) du fournisseur (10) dispose de l'application spéciale de clé.

11. Procédé suivant l'une des revendications 1 à 10,
dans lequel la pièce (1) est un serveur, un composant électronique intégré dans une plaquette à circuit imprimé ou un module de transmission de données.

12. Produit de programme d'ordinateur, comprenant des instructions, qui, lors de l'exécution du programme par un ordinateur, font que celui-ci exécute tous les stades du procédé suivant l'une des revendications 1 à 11.

13. Pièce (1),
comprenant une mémoire (51), un processeur (52) et une interface (53) de communication,
dans laquelle la pièce (1) est agencée pour un procédé suivant l'une des revendications 1 à 11.

14. Système (6) pour faire fonctionner des véhicules (61) ferroviaires, qui comprend plusieurs pièces (1) suivant la revendication 13,
dans lequel les pièces (1) se trouvent dans au moins l'un des véhicules (61) ferroviaires, dans au moins un poste (62) centralisé de voie et/ou dans au moins un poste (63) de commande du système (6) .
